# EUROPÄISCHE PATENTANMELDUNG

(11) **EP 0 694 767 A2**
(43) Veröffentlichungstag der Anmeldung: **31.01.1996**
(21) Anmeldenummer: 95111097.2
(22) Anmeldetag: 14.07.1995
(51) Int. Cl.: G01F 13/00

(54) **Überwachungseinrichtung**

(30) Priorität: 20.07.1994 DE 4425708; 19.04.1995 DE 29506598 U
(71) Anmelder: Paech, Heiner, D-89075 Ulm (DE)
(72) Erfinder: Paech, Heiner, D-89075 Ulm (DE)
(74) Vertreter: Pfenning, Meinig & Partner

(57) **Zusammenfassung**

Die Erfindung betrifft eine Flüssigkeitsaufnahmeüberwachungseinrichtung, mit der Menschen die vorzugsweise täglich getrunkene Flüssigkeitsmenge überwachen können, die es ermöglicht, ständig zu überprüfen, ob die tatsächlich aufgenommene Flüssigkeitsmenge mit einem vorgegebenen Wert übereinstimmt oder ob noch ein Defizit vorhanden ist.

Die Einrichtung besteht aus einer Eingabeeinrichtung (4) zur Eingabe von Zeitintervall begrenzt vorgegebenen Flüssigkeitsmengensollwerten und tatsächlich aufgenommenen Flüssigkeitsmengen in eine Wissensbasis, die die eingegebenen Mengendaten anzeigt und/oder einer Soll-Istwertvergleichseinrichtung zur Durchführung eines solchen Vergleiches innerhalb vorzugebender Zeitintervalle zuführt und einer Anzeigeeinrichtung (3) zur optischen Wiedergabe der in der Wissensbasis gespeicherten Daten und der/des Vergleichsergebnisse(s).

## Beschreibung

Die Erfindung betrifft eine Überwachungseinrichtung, mit der ereignis-, mengen- und/oder zeitabhängige Größen, insbesondere die täglich getrunkene Flüssigkeitsmenge, überwacht werden können, die ohne weiteres von Personen mitgeführt werden kann.

Im alltäglichen Leben sind die verschiedensten Größen (Massen, Volumen, die Anzahl von Ereignissen u.a.), die ereignis-, mengen- und/oder zeitabhängig sind, zu überwachen. Beispielsweise müssen besonders ältere urologisch erkrankte Menschen und Leistungssportler eine bestimmte Flüssigkeitsmenge im Tagesverlauf zu sich nehmen. Viele haben dabei das Problem, nicht oder nur schwer einschätzen zu können, ob sie das "Tagessoll" oder die für einen anderen Zeitraum vorgegebene Menge erreicht haben oder nicht.

Es ist daher Aufgabe der Erfindung, eine Einrichtung zu schaffen, die es ermöglicht, ständig und ortsunabhängig zu überprüfen, ob eine oder mehrere ereignis-, mengen- und/oder zeitabhängige Größe(n), wie z.B. die tatsächlich aufgenommene Flüssigkeitsmenge, mit einem vorgegebenen Wert übereinstimmt oder ob noch ein Defizit vorhanden ist.

Erfindungsgemäß wird diese Aufgabe durch die Merkmale des Anspruchs 1 gelöst. Vorteilhafte Ausgestaltungen und Weiterbildungen der Erfindung ergeben sich aus den in den untergeordneten Ansprüchen enthaltenen Merkmalen.

Die vorzugsweise in einem mit einem Armband verbindbaren Gehäuse untergebrachte Einrichtung weist, wie eine herkömmliche Uhr mit digitaler Anzeige, eine Flüssigkeitskristallanzeige, eine Analoganzeige oder eine mechanische Anzeige, wie sie beispielsweise bei Kurzzeitweckern bekannt ist, auf. Zusätzlich ist eine Eingabeeinrichtung mit mehreren Eingabetasten vorhanden, die zur Eingabe von Zahlenwerten und zur Auswahl oder dem Ein- und Ausschalten verschiedener Funktionen verwendet werden.

Beispielsweise ist die Verwendung einer bekannten Uhr mit integrierter Rechnereinheit, die mit der erfindungsgemäßen Überwachungseinrichtung aufgerüstet ist, möglich. Der Mikroprozessor muß hierzu lediglich in die Lage versetzt werden, die einzugebende(n) Größe(n), z.B. die bisher getrunkene Menge, mittels der Anzeigeeinrichtung anzuzeigen und/oder einen Soll/Istwert-Vergleich von einem vorzugebenden Sollwert der täglich zu trinkenden Flüssigkeitsmenge mit der tatsächlich aufgenommenen Menge, die über die Tastatur eingegeben wird, durchzuführen und das Ergebnis optisch anzuzeigen. Die bereits bei solchen Uhren vorhandene Funktionsauswahlmöglichkeit wird um die weitere Funktion erweitert. Dabei kann die entsprechende Funktionsauswahltaste verwendet werden.

Selbstverständlich kann die Überwachungseinrichtung auch als einfunktionales Element ausgebildet sein. Hierbei dienen Eingabe-, Anzeige-, Speicher- und Vergleichseinrichtung ausschließlich dem einen Verwendungszweck. In einfachster Form werden die eingegebenen Daten in einen Speicher abgelegt und ständig oder bei Abruf angezeigt und/oder in einem Vergleicher einem Soll/Istwert-Vergleich unterzogen, dessen Ergebnis auf der Anzeigeeinrichtung wiedergegeben wird. Dabei müssen zumindest die Daten der ereignis-, mengen- und/oder zeitabhängigen Größe(n) täglich oder für einen vorgegebenen Zeitraum neu manuell eingegeben und außerdem ein Rücksetzen durchgeführt werden. Auf dieses Rücksetzen kann verzichtet werden, wenn eine Zeitmeßeinrichtung kombiniert eingesetzt und in den Soll/Istwert-Vergleich einbezogen wird.

Günstig ist es, wenn mindestens eine Warneinrichtung bzw. Signaleinrichtung vorhanden ist, die ab einer bestimmten, ebenfalls vorgebbaren Tageszeit anzeigt, daß der Soll/Istwert-Vergleich ein unerwünschtes Ergebnis, z.B. ein Flüssigkeitsdefizit, ergibt und die entsprechende Person dann zum Trinken animiert. Diese Warneinrichtung kann für die optische Anzeige ein blinkendes Element oder für die akustische Warnung ein Lautsprecher, Summer, ein körperlich wahrnehmbarer Reizgeber oder ein Unruheelement (Vibrator) sein. Eine solche Warn- bzw. Signaleinrichtung kann auch eingeschaltet werden, wenn der Sollwert erreicht worden ist und beispielsweise zur Belohnung eine Melodie ertönt.

Zur Vereinfachung der Bedienung können Tasten vorgesehen werden, die für bestimmte Größen (Mengen) z.B. bei Flüssigkeitsmengen, beispielsweise Teile vom Litermaß, stehen und deren einmalige Betätigung für die entsprechende Eingabe ausreicht.

Da insbesondere ältere Menschen Probleme bei der Erfassung digital dargestellter Werte in Sachzusammenhängen haben, kann eine Analoganzeige eingesetzt werden, die bevorzugt Prozentualwerte als Säulen- oder Kreisdiagramm anzeigt.

Die bevorzugt wie eine Uhr am Arm tragbare Überwachungseinrichtung zur Erkennung mittels einer Anzeige zur Eingabe und Auswertung von über Tasten (Schalter) eingebbaren Größen kann auch Kombinationen verschiedener Größen überwachen. Die Anzahl der Tasten ist vorteilhaft auf die unbedingt erforderliche Anzahl zu beschränken, wobei Mehrfachfunktionen einzelner Tasten möglich sind.

Als Energiequelle können verschiedene Elemente, wie Batterien, Solarzellen oder galvanische Elemente, allein oder in Kombination verwendet werden. Vorteilhaft ist es, diese zumindest parallel einzusetzen, so daß eine Redundanz bei Ausfall einer Energiequelle gegeben und der Erhalt der Funktion gesichert ist. Es kann auch eine AUTO-SHUT-DOWN-Schaltung vorgesehen sein, die ein schnelles Abschalten aller Funktionen bei Nichtbedarf auslöst und zur Energieeinsparung beiträgt, so daß über einen langen Zeitraum bzw. die gesamte Lebensdauer der Betrieb der Überwachungseinrichtung ohne Ersatz einer Energiequelle gesichert ist. Die Überwachungseinrichtung wird bei Bedarf durch eine Tastenbetätigung nach dem selbsttätigen Ausschalten wieder aktiviert.

Alle notwendigen Elemente können auf einem zumindest teilweise biegbaren Träger angeordnet sein. Dieser kann zumindest teilweise als Folientastatur ausgebildet sein, die je nach Verwendungszweck eine entsprechend bedruckte Deckfolie aufweist, der die Funktionen und Mengen- bzw. Größenangaben der jeweiligen Tasten numerisch beschrieben oder als Piktogramm entnehmbar sind.

Die Deckfolie kann in Teilbereichen zur Anpassung an die Höhe der verwendeten einzelnen Elemente, zur Erzielung einer gewünschten Biegeelastizität und zur Erhöhung der Stabilität erhaben ausgebildet sein.

Vorzugsweise zur Anbringung am Körper oder Arm der jeweiligen Person ist der Träger als geschlossener oder schließbarer Ring ausgebildet. Der geschlossene Ring ist mit einer unlösbaren Verbindung durch z.B. Verschweißen, Verkleben oder eine mechanische Verbindung herstellbar. In diesem Fall ist der Träger so auszubilden, daß der Umfang und damit auch der Durchmesser an verschiedene Größen angepaßt werden kann. Hierfür können wellenförmige Abschnitte vorhanden sein, die eine gewisse Eigenspannung aufweisen und trotzdem dehnbar sind, um eine Umfangsreserve zu schaffen. Eine andere Möglichkeit ist eine mäanderförmige Ausbildung der Randkontur oder das Einbringen von Aussparungen, die die Dehnbarkeit des Materials ermöglichen und dadurch auch erleichtern. Es können aber auch elastische oder plastische Materialien in den Ring eingesetzt werden, die eine Anpassung an den erforderlichen Armumfang ermöglichen.

Wird ein Ring mit einer lösbaren Verbindung verwendet, können an den miteinander zu verbindenden Enden Schnallen-, Hebelverschlüsse, Einrastzapfen, Klettverschlüsse oder magnetisch wirkende Verbindungselemente aus Metall, Gummi oder Kunststoff verwendet werden.

Für eine stationäre Verwendung kann beispielsweise eine Durchbrechung vorhanden sein, die zum Aufhängen der erfindungsgemäßen Einrichtung genutzt werden kann.

Zum Abstellen der Überwachungseinrichtung nach der Erfindung kann diese zumindest teilweise einen oder mehrere plastische Bereiche aufweisen, der/die so verformbar ist/sind, daß ein Abstellen möglich ist. Hierfür kann auch ein mit der Einrichtung auch temporär verbindbares zusätzliches Element verwendet werden. Es besteht auch die Möglichkeit temporär andere Elemente, wie z.B. einen Saugfuß, Klettverschluß, magnetisches Halteelement oder ein selbstklebendes Element an der Einrichtung bei einem solchen stationären Einsatz anzubringen.

Nachfolgend soll die Erfindung an Ausführungsbeispielen näher erläutert werden.

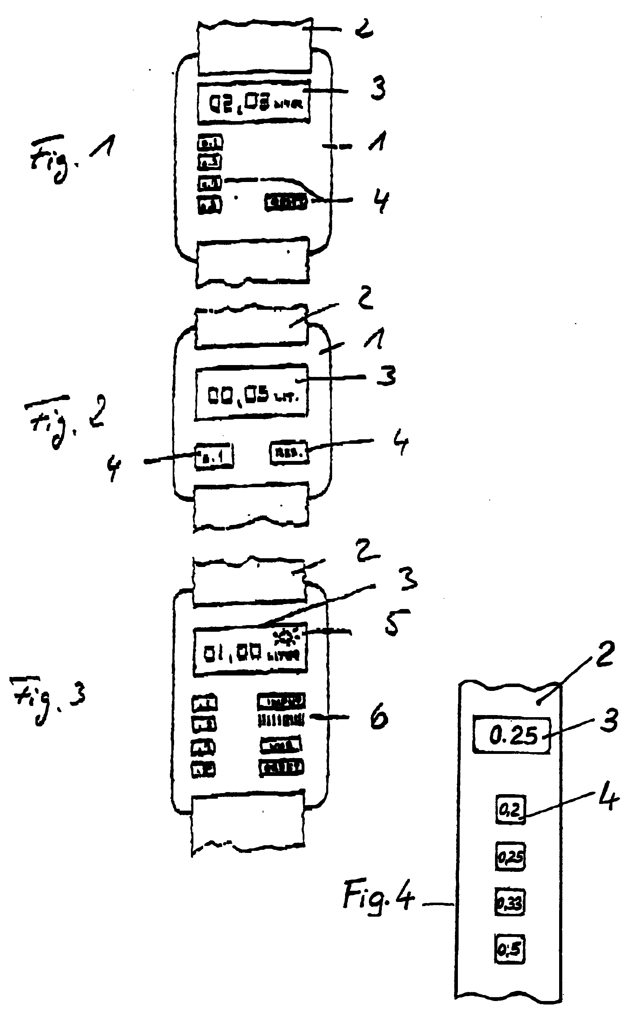

Dabei zeigen die Figuren 1 bis 4 unterschiedliche Ausführungen von Eingabe- und Anzeigeeinrichtungen für eine an einem Armband zu tragende Flüssigkeitsaufnahme-Überwachungseinrichtung.

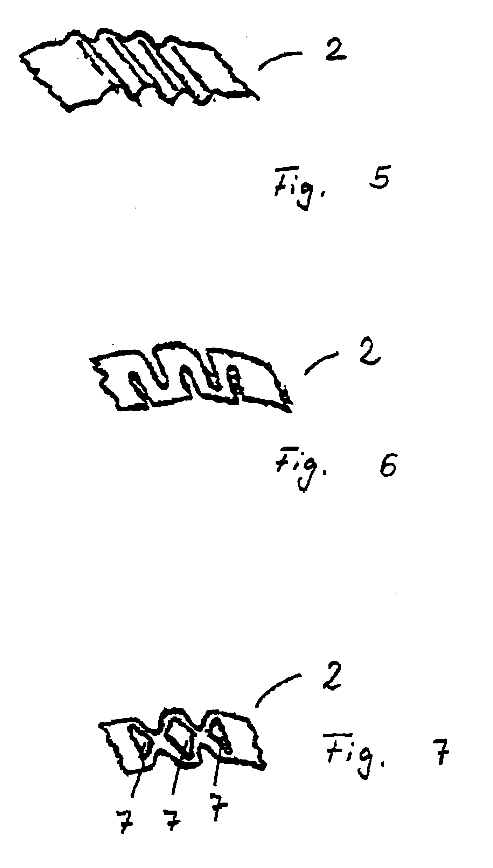

Die Figuren 5 bis 7 zeigen Ausführungsformen eines verwendbaren Trägers für eine erfindungsgemäße Überwachungseinrichtung.

In den Figuren bezeichnen gleiche Bezugszeichen gleiche Elemente.

In einem Gehäuse 1, das mit einem als Träger 2 dienenden Band am Arm oder in sonstiger Weise am Körper eines Menschen befestigt werden kann, ist eine in dieser Darstellung nicht erkennbare Speichereinheit in Form einer Wissensbasis, die mit einer Einrichtung zum Soll/Istwert-Vergleich verbunden ist, aufgenommen. Das Gehäuse 1 dient darüber hinaus als Träger für ein Display 3 und Eingabetasten 4. Das Display 3 in Form einer Flüssigkeitskristallanzeige zeigt je nach Auswahl entweder die gerade eingegebene Flüssigkeitsmenge und/oder die Summe der eingegebenen Flüssigkeitsmenge und/oder die Differenz zum Sollwert an.

Die in der Figur links übereinander angeordneten Eingabetasten 4 entsprechen vorgegebenen Mengenangaben für üblicherweise verwendete Mengen wie 0,1 l, 0,2 l, 0,25 l, 0,33 l und 0,5 l. Die einzelne auf der rechten Seite plazierte Eingabetaste dient zur Funktionsauswahl und/oder Rücksetzen des Speichers, bei deren Betätigung die Uhr-, Rechner- oder Überwachungsfunktion eines kombiniert ausgeführten Gerätes auswählbar ist. Eine weitere Anwendungsmöglichkeit dieser oder einer weiteren Taste ist das Aus- und Einschalten einer Warneinrichtung.

Der Figur 2 ist eine vereinfachte Ausführungsform mit nur zwei einzelnen Tasten zu entnehmen, wobei die linke Taste zur Eingabe von Mengendaten verwendet wird, die je nach Anzahl der Betätigungen in vorgegebenen Schritten, beispielsweise 0,1 l bis zum gewünschten Endwert, eingestellt werden kann. Die Auswahl der Funktion und das Rücksetzen des Speichers kann dann in der vorbeschriebenen Form durchgeführt werden.

Bei dem Beispiel nach Figur 3 ist im Display 3 ein optisches Warnsignal 5 integriert, das ab einer vorbestimmten Tageszeit anzeigt, daß ein bestimmter Mengensollwert noch nicht erreicht oder bereits überschritten ist. Diese optische Anzeige 5 kann mit einer nicht dargestellten akustischen Warneinrichtung gekoppelt sein. Im Falle der Verwendung einer akustischen Warneinrichtung 6 sollte für diese die Möglichkeit der Ausschaltbarkeit bestehen.

Bei dieser Ausführungsform ist eine relativ hohe Anzahl von Eingabetasten 4 vorgesehen, die in der Regel nur einfunktional ausgenutzt werden.

In Figur 4 sind entsprechend Figuren 1 bis 3 Funktionen und Funktionselemente im Träger 2 integriert.

Die Figuren 5 bis 7 zeigen in möglichen Ausführungen Abschnitte des Trägers 2, der als Armband ausgebildet sein kann.

Dabei ist bei dem in Figur 5 dargestellten Beispiel zumindest ein Teil des Trägers 2 wellenförmig ausgebildet. Das Material weist eine gewisse Eigenspannung auf, die es in Verbindung mit der durch die Wellenform vorgegebenen Längenausdehnungsmöglichkeit ermöglicht, eine Anpassung an die erforderliche Länge zu erreichen.

Das in der Figur 6 gezeigte Beispiel eines Trägers 2 weist in seinen Randbereichen eine mäanderförmige Gestaltung durch das Einbringen von Aussparungen auf, die bei einer gewissen Eigenelastizität ebenfalls eine Dehnung des Trägers 2 ermöglicht und erleichtert.

Der in der Darstellung nach Figur 7 ausgebildete Träger 2 ist eine Variation des Beispiels nach Figur 6 mit zusätzlich eingebrachten Aussparungen 7, die bei Zug eine Längsdehnung des Trägers 2 ebenfalls erleichtern. Die Aussparungen im Randbereich sind hier nicht mäanderförmig, sondern in Vis-à-vis-Stellung eingebracht. Im nicht gedehnten Zustand des Trägers 2 sind die Aussparungen 7 beispielsweise nur schlitzförmig ausgebildet.

## Patentansprüche

1. Überwachungseinrichtung für ereignis- und/oder zeitabhängige Größen und Mengen, bestehend aus
einer Eingabeeinrichtung (4), über die die Größen in eine Wissensbasis gebbar sind, und einer Anzeige (3) zur optischen Wiedergabe der vorgegebenen gespeicherten oder der eingegebenen Größen, Mengen und/oder der Ergebnisse einer Soll/Istwert-Vergleichseinrichtung, in der ein ereignis-, mengen- und/oder zeitabhängiger Vergleich der eingegebenen Größen durchführbar ist.

2. Überwachungseinrichtung nach Anspruch 1,
dadurch gekennzeichnet, daß über die Eingabeeinrichtung ein zeitintervallabhängiger Sollwert eingebbar und mit einem eingegebenen Größenwert in der Soll/Istwert-Vergleichseinrichtung vergleichbar ist.

3. Überwachungseinrichtung nach einem der Ansprüche 1 oder 2,
dadurch gekennzeichnet, daß eine Zeitmeßeinrichtung zur zeitabhängigen Soll/Istwert-Vergleichsdurchführung mit der Soll/Istwert-Vergleichseinrichtung verbunden ist.

4. Überwachungseinrichtung nach Anspruch 1,
dadurch gekennzeichnet, daß parallel zur Anzeigeeinrichtung (3) eine akustische Warneinrichtung und/oder eine optische Warneinrichtung vorhanden ist.

5. Überwachungseinrichtung nach mindestens einem der Ansprüche 1 bis 4,
dadurch gekennzeichnet, daß die Eingabeeinrichtung (4) Einzelelemente aufweist, die vorgegebenen Werten zugeordnet sind.

6. Überwachungseinrichtung nach einem der Ansprüche 1 bis 5,
dadurch gekennzeichnet, daß die Elemente auf einem zumindest teilweise biegbaren Träger (2) aufgebracht sind.

7. Überwachungseinrichtung nach Anspruch 6,
dadurch gekennzeichnet, daß der Träger (2) durch eine zumindest teilweise wellenförmige Ausbildung und/oder eine Ausbildung, die an den äußeren Rändern mindestens teilweise mäanderförmig ist, eine Umfangsreserve aufweist.

8. Überwachungseinrichtung nach einem der Ansprüche 1 bis 7,
dadurch gekennzeichnet, daß eine auf den Träger (2) aufgebrachte Deckfolie zumindest teilweise erhaben geprägt ist.

9. Überwachungseinrichtung nach einem der Ansprüche 1 bis 8,
dadurch gekennzeichnet, daß ein Befestigungselement vorhanden oder temporär anbringbar ist.

10. Überwachungseinrichtung für oral aufzunehmende Flüssigkeitsmengen in der humanen Anwendung, bestehend aus
einer Eingabeeinrichtung (4) zur Eingabe von Zeitintervall begrenzt vorgegebenen Flüssigkeitsmengen-Sollwerten und tatsächlich aufgenommenen Flüssigkeitsmengen in eine Wissensbasis, die die eingegebenen Mengendaten anzeigt, und/oder einer Soll/Istwert-Vergleichseinrichtung zur Durchführung eines solchen Vergleiches innerhalb vorzugebender Zeitintervalle zuführt, und
einer Anzeigeeinrichtung (3) zur optischen Wiedergabe der in der Wissensbasis gespeicherten Daten und der/des Vergleichsergebnisse(s).
